# DEMANDE DE BREVET EUROPEEN

(11) **EP 4 115 977 A1**
(43) Date de publication de la demande: **11.01.2023**
(21) Numéro de dépôt: 22180321.6
(22) Date de dépôt: 22.06.2022
(51) Int. Cl.: B01L 1/02, B08B 15/02, B25J 21/02, F16J 13/18, G21F 7/005

(54) **INSTALLATION DE PRÉPARATION D'UN PRODUIT CENTRIFUGÉ, AINSI QUE PROCÉDÉ DE PRÉPARATION CORRESPONDANT UTILISANT UNE TELLE INSTALLATION**

(30) Priorité: 23.06.2021 FR 2106701
(71) Demandeur: JCE Biotechnology, 03270 Hauterive (FR)
(72) Inventeur: GOHIER, Eric, 03200 VICHY (FR)
(74) Mandataire: Lavoix

(57) **Abrégé**

Cette installation comprend un portoir (10), dont le corps (11) intègre des aménagements (12) recevant de manière amovible et retenant de manière fixe un ou plusieurs tubes (1) contenant une substance (2) à centrifuger, et un conteneur (20), délimitant un volume (V20) clos et pourvu d'un dispositif d'accès (21) comprenant une bride (23) et une porte (24). Le conteneur est conçu pour loger fixement le portoir dans son volume lorsque sa porte est fermée, le corps du portoir intégrant des reliefs de calage (14) qui coopèrent par complémentarité de formes avec le conteneur de manière à maintenir en place le portoir. Le conteneur est également conçu pour laisser le portoir être introduit dans son volume et en être retiré lorsque sa porte est ouverte, sans que les reliefs de calage n'entrent en interférence mécanique avec des moyens de fixation réversible entre la bride et la porte. L'installation comprend également un isolateur, qui délimite un volume clos à l'intérieur duquel le portoir est déplaçable et à l'extérieur duquel une centrifugeuse est agencée, et qui est pourvu d'un dispositif d'accès comprenant une bride et une porte. Le dispositif d'accès du conteneur et le dispositif d'accès de l'isolateur sont assemblables de manière réversible de sorte que, dans un état assemblé, les volumes de conteneur et de l'isolateur sont reliés entre eux à travers leur bride lorsque leur porte sont ouvertes et, dans un état désassemblé, le conteneur est déplaçable entre l'isolateur et la centrifugeuse tout en maintenant fermées leur porte.

## Description

La présente invention concerne une installation de préparation d'un produit centrifugé. L'invention concerne également un procédé de préparation d'un produit centrifugé, utilisant une telle installation.

La préparation de certains produits nécessite des mesures de confinement spécifiques, notamment pour éviter que ces produits et/ou les substances utilisées pour les préparer n'entrent en contact avec l'opérateur chargé des opérations de préparation et avec l'environnement de cet opérateur. Ces produits sont par exemple des produits stériles ou bien des produits dangereux comme certains produits biologiques ou chimiques. La préparation de ces produits est donc opérée sous une atmosphère contrôlée, à l'intérieur d'un isolateur. L'isolateur comprend typiquement un plan de travail qui est entouré de parois de manière à isoler un volume clos et à atmosphère contrôlée vis-à-vis de l'extérieur de l'isolateur. L'opérateur manipule les objets situés dans ce volume clos par l'intermédiaire de gants ou d'outils, fixés sur les parois de l'isolateur.

De tels isolateurs sont largement utilisés dans le domaine de la biologie et de la santé, notamment pour la préparation de produits médicamenteux. C'est en particulier le cas pour les médicaments de thérapie innovante, qui sont couramment désignés par leur acronyme MTI et qui sont des médicaments composés de cellules, de tissus et/ou de gênes : les produits cellulaires ou tissulaires sont par exemple utilisés dans le but de suppléer des fonctions perdues chez un patient, de favoriser les mécanismes de réparation ou de stimuler le système immunitaire contre des virus ou des cellules tumorales ; la thérapie génique consiste, quant à elle, à introduire dans les cellules d'un patient un ou plusieurs gènes qui suppléeront des gènes défaillants, l'introduction de ce « gène médicament » dans la cellule cible étant réalisée via un virus génétiquement modifié, utilisé comme vecteur. Quelle soit leur nature, la préparation des médicaments de thérapie innovante présente la spécificité de souvent devoir inclure une ou plusieurs étapes de centrifugation, prévues notamment entre le prélèvement de cellules et leur ré-administration. Ces étapes de centrifugation sont mises en œuvre en utilisant une centrifugeuse qui est installée à l'intérieur de l'isolateur, dans le volume clos et à atmosphère contrôlée de ce dernier.

Or, les centrifugeuses standard sont généralement inadaptées aux contraintes de nettoyage, de biodécontamination et d'étanchéité, qui sont usuellement rencontrées pour les isolateurs et qui sont déterminantes pour la préparation des médicaments de thérapie innovante. Aussi, les centrifugeuses installées à l'intérieur des isolateurs doivent être fabriquées sur mesure et l'isolateur doit être adapté en conséquence, ce qui aboutit à une installation particulièrement onéreuse. De plus, lors de l'entretien ou d'un dysfonctionnement de la centrifugeuse, l'installation doit être totalement arrêtée pendant la durée de la maintenance ou de la réparation de la centrifugeuse, cette durée étant majorée par la nécessité de devoir, avant et après intervention, biodécontaminer les parois de la centrifugeuse qui se trouvent en contact avec l'atmosphère contrôlée.

De son côté, JP 2005 103359 A a proposé une installation de préparation un produit centrifugé, comportant un isolateur et un conteneur, ainsi qu'une centrifugeuse située à l'extérieur de l'isolateur. Le conteneur est équipé d'un dispositif d'accès, comprenant une bride et une porte. De plus, le conteneur est raccordable de manière réversible à l'isolateur, en permettant à un opérateur, situé à l'extérieur de l'isolateur, de manipuler un tube d'échantillon situé à l'intérieur de l'isolateur afin de déplacer ce tube jusqu'à l'intérieur du conteneur où le tube est retenu directement dans un logement dédié du conteneur. La manipulation des tubes par l'opérateur est fastidieuse, en particulier au niveau du dispositif d'accès dont est équipé le conteneur, avec le risque que la mise en place des tubes dans le conteneur soit mal opérée et donc insuffisante pour retenir efficacement ces tubes lors de leur centrifugation ultérieure.

Le but de la présente invention est de proposer une nouvelle installation permettant de préparer des produits centrifugés, qui soit pratique, économique et facile à utiliser.

A cet effet, l'invention a pour objet une installation de préparation d'un produit centrifugé, telle que définie à la revendication 1.

L'invention a également pour objet un procédé de préparation d'un produit centrifugé, tel que défini à la revendication 9.

Une des idées à la base de l'invention est d'utiliser une centrifugeuse standard, qu'on ne cherche pas à installer à l'intérieur de l'isolateur, mais qui est déportée de l'isolateur, en étant agencée à l'extérieur du volume clos et à atmosphère contrôlée de cet isolateur. Pour ce faire, l'invention prévoir d'utiliser un portoir, permettant de retenir un ou plusieurs tubes contenant une substance à centrifuger, et un conteneur qui est conçu pour loger le portoir dans un volume clos et pour être monté dans la centrifugeuse afin d'être soumis à une force centrifuge. Afin que le portoir puisse être manipulé à l'intérieur de l'isolateur et être transféré d'abord dans puis depuis le conteneur tout en demeurant sous atmosphère contrôlée, le conteneur et l'isolateur sont respectivement pourvus de dispositifs d'accès qui sont assemblables l'un à l'autre de manière réversible : à l'état assemblé des dispositifs d'accès, les volumes clos respectifs du conteneur et de l'isolateur peuvent être reliés entre eux à travers les dispositifs d'accès et le portoir peut alors être déplacé entre ces deux volumes ; à l'état désassemblé des dispositifs d'accès, les volumes clos respectifs du conteneur et de l'isolateur peuvent être maintenus fermés par les dispositifs d'accès et le conteneur peut être déplacé entre l'isolateur et la centrifugeuse. L'installation conforme à l'invention permet ainsi de facilement préparer des produits centrifugés tout en respectant des mesures de confinement strictes lors de la préparation de ces produits. En d'autres termes, le procédé conforme à l'invention est particulièrement pratique.

De plus, l'installation conforme à l'invention est simple et économique, en particulier du fait que, d'une part, la centrifugeuse de l'installation relève d'une technologie standard et, d'autre part, l'isolateur de l'installation n'est pas contraint, notamment en termes de dimension et d'intégration, par l'installation dans son volume clos d'une centrifugeuse qui présenterait des aménagements spéciaux. Lors de la maintenance ou en cas de dysfonctionnement de la centrifugeuse de l'installation conforme à l'invention, la production des produits centrifugés peut être continuée moyennant le recours à une centrifugeuse standard de remplacement.

On notera que l'invention s'applique à tout type d'isolateur, au sens large du terme. Ainsi, on entend ici par « isolateur » une enceinte, qui est isolée de l'extérieur de manière étanche et qui permet de maîtriser son atmosphère intérieure, en particulier la stérilité et/ou l'asepsie de cette dernière, pour éviter toute contamination entre l'intérieur et l'extérieur de l'enceinte. L'isolateur considéré ici recouvre donc les installations couramment appelées « isolateurs médicaux ou pharmaco-médicaux », les boites à gants, les postes de sécurité microbiologique, etc.

Des caractéristiques additionnelles avantageuses de l'installation et du procédé conformes à l'invention sont spécifiées aux autres revendications.

L'invention sera mieux comprise à la lecture de la description qui va suivre, donnée uniquement à titre d'exemple et faite en se référant aux dessins sur lesquels :
[Fig. 1] la figure 1 est une vue en perspective d'un isolateur et d'un conteneur appartenant à une installation conforme à l'invention ;
[Fig. 2] la figure 2 est une coupe selon le plan II de la figure 1 ;
[Fig. 3] la figure 3 est une vue en perspective éclatée du conteneur de la figure 1, ainsi que d'un portoir appartenant à l'installation conforme à l'invention ;
[Fig. 4] la figure 4 est une coupe longitudinale du conteneur et du portoir de la figure 3, dans une configuration assemblée ; et
[Fig. 5] la figure 5 est une vue schématique en perspective d'une centrifugeuse appartenant à l'installation.

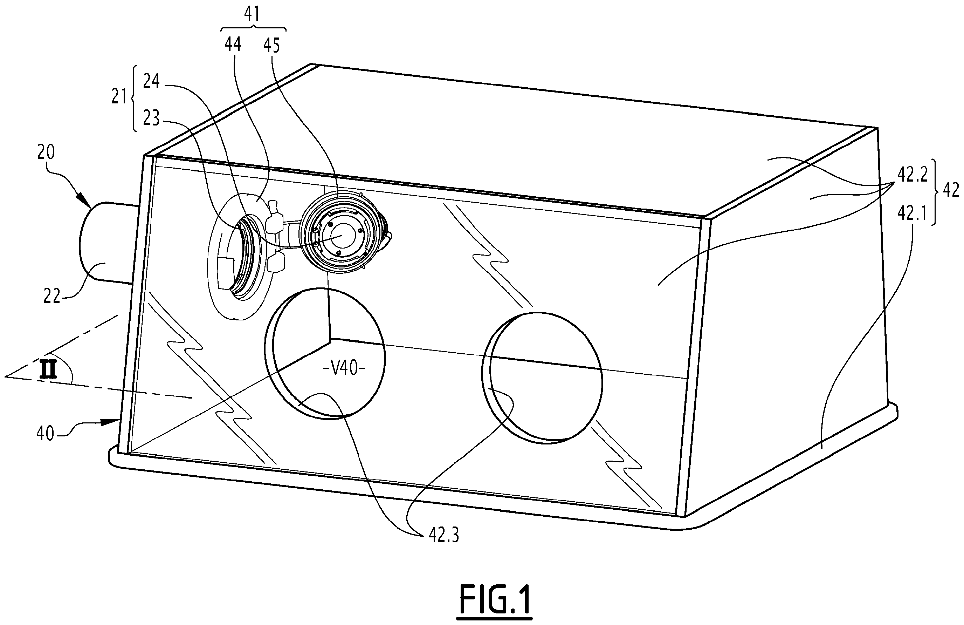

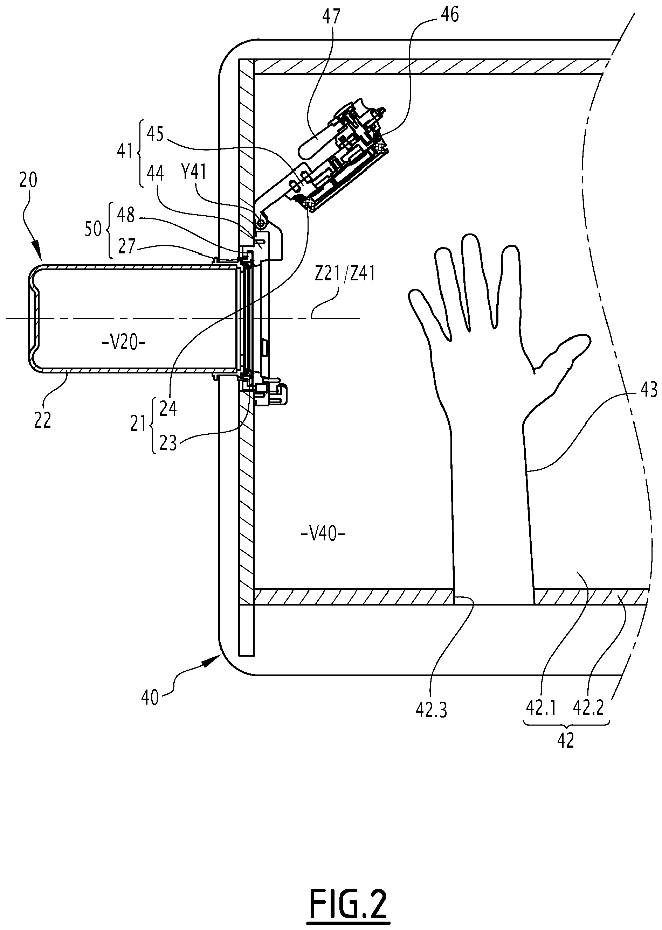

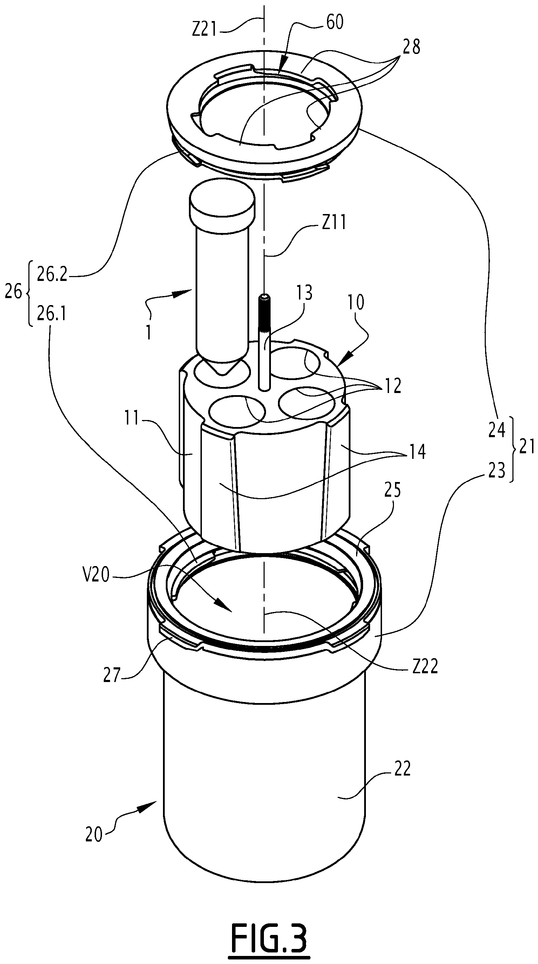

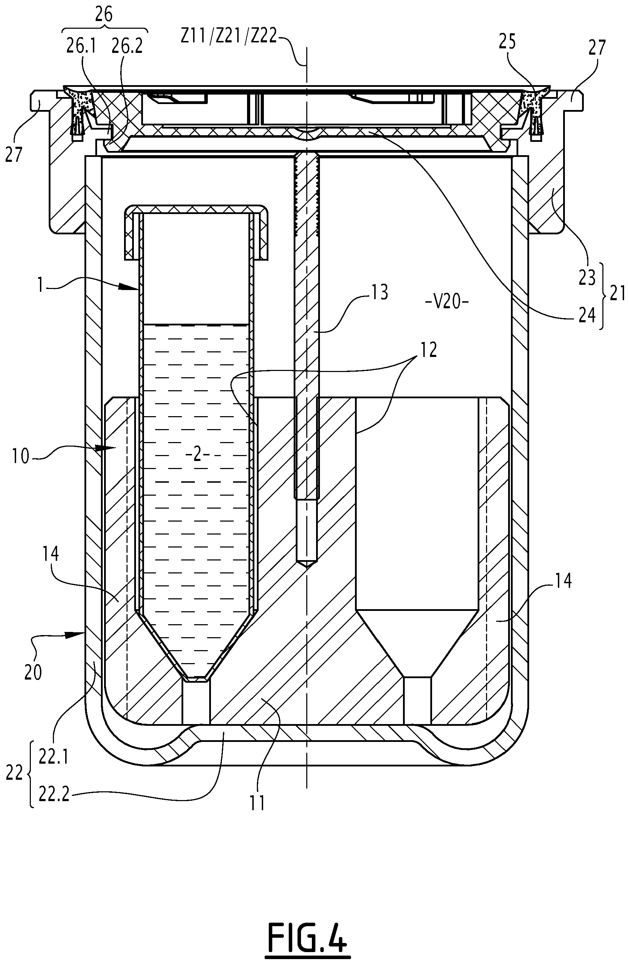

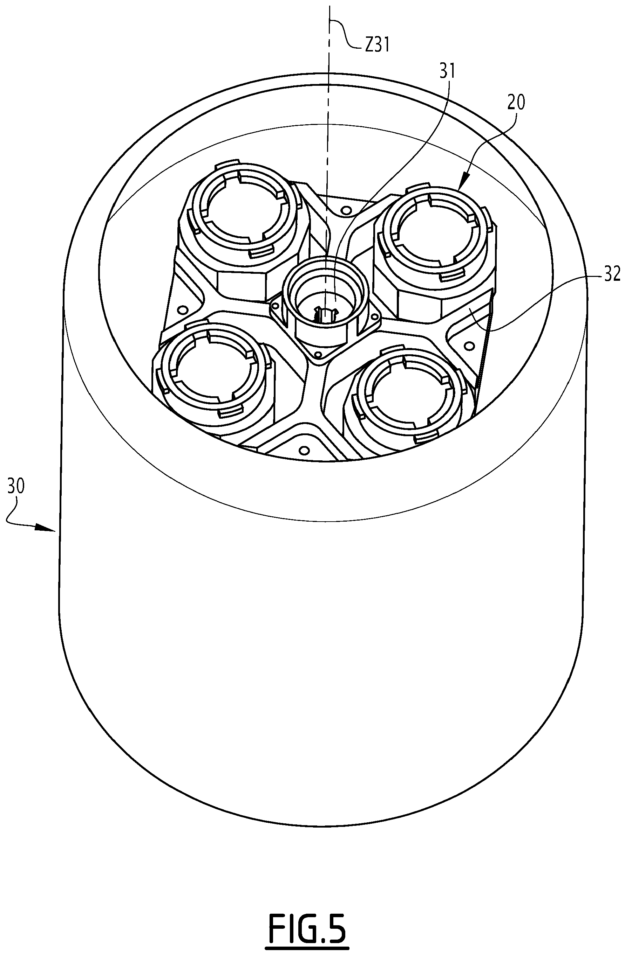

Sur les figures 1 à 5 sont représentés divers composants d'une installation permettant de préparer des produits centrifugés, en particulier des produits médicamenteux, notamment des médicaments de thérapie innovante qui ont été évoqués dans la partie introductive du présent document. Ces composants incluent un portoir 10, qui est visible sur les figures 3 et 4, un conteneur 20, qui est visible sur les figures 1 à 5, une centrifugeuse 30, qui est visible sur la figure 5, et un isolateur 40, qui est visible sur les figures 1 et 2. Le portoir 10, le conteneur 20, la centrifugeuse 30 et l'isolateur 40 vont être décrits successivement ci-après.

Le portoir 10 est adapté pour à la fois recevoir de manière amovible et retenir de manière fixe un ou plusieurs tubes 1 contenant une substance 2 à centrifuger. En pratique, ni la forme de réalisation des tubes 1, ni la nature de la substance 2 ne sont limitatives. En particulier, la forme du tube 1 visible sur les figures 3 et 4 n'est qu'un exemple. Autrement dit, le ou les tubes 1 et la substance 2 doivent être entendus ici dans un sens large, allant notamment au-delà de ce qui est illustré sur les figures.

Le portoir 10 comporte un corps 11 qui intègre des aménagements 12 dédiés à la réception amovible et à la retenue fixe du ou des tubes 1. En pratique, on comprend que ces aménagements 12 sont façonnés et dimensionnés en fonction du ou des tubes 1, en étant notamment adaptés à la forme de ces derniers. Dans l'exemple de réalisation considéré sur les figures, le corps 11 présente une forme globalement cylindrique, centrée sur un axe géométrique Z11, et les aménagements 12 comprennent des trous, qui sont respectivement complémentaires des tubes 1 et qui débouchent sur une face d'extrémité axiale du corps 11, en étant répartis autour de l'axe Z11, comme bien visible sur les figures 3 et 4.

Pour faciliter la manipulation du portoir 10, ce dernier comprend avantageusement une poignée de préhension 13. Dans l'exemple de réalisation considéré sur les figures, la poignée 13 est centrée sur l'axe Z11 et s'étend en saillie depuis la face d'extrémité axiale du corps 11, sur laquelle débouchent les trous appartenant aux aménagements 12.

Pour des raisons qui apparaîtront plus loin, le corps 11 est pourvu de reliefs 14. Dans l'exemple de réalisation considéré sur les figures, les reliefs 14 sont en saillie de la face latérale du corps 11, en s'étendant chacun entre les extrémités axiales opposées de ce corps, et sont répartis régulièrement autour de l'axe Z11, en étant espacés deux à deux suivant la périphérie du corps 11.

Le conteneur 20 délimite un volume V20 clos auquel il est possible d'accéder par un dispositif d'accès 21 dont est pourvu le conteneur 20. A cet effet, le conteneur 20 comprend un corps 22 sur lequel est monté le dispositif d'accès 21. Dans l'exemple de réalisation considéré sur les figures, le corps 22 inclut une paroi tubulaire 22.1, qui est centrée sur un axe géométrique Z22, et un fond 22.2 qui ferme la paroi tubulaire 22.1 au niveau de l'une de ses deux extrémités axiales opposées, tandis que l'autre extrémité axiale de la paroi tubulaire 22.1 est ouverte et porte le dispositif d'accès 21. Le volume V20 est ainsi délimité par la paroi tubulaire 22.1, le fond 22.2 et le dispositif d'accès 21, comme bien visible sur la figure 4.

Comme bien visible sur les figures 1 à 4, le dispositif d'accès 21 comporte une bride 23 et une porte 24.

La bride 23 délimite une ouverture traversante, présentant un contour fermé, et définit ainsi un axe central Z21 sur lequel son ouverture traversante est centrée. Dans l'exemple de réalisation considéré sur les figures, l'ouverture traversante de la bride 23 présente un profil circulaire, centré sur l'axe Z21, étant remarqué que, à titre de variantes non représentées, d'autres profils géométriques sont envisageables. Dans tous les cas, la bride 23 est solidarisée de manière étanche au corps 22 de manière à relier le volume V20 à l'extérieur du conteneur 20 via l'ouverture traversante de la bride 23. Dans l'exemple de réalisation considéré ici, les axes Z21 et Z22 sont sensiblement alignés. La forme de réalisation de la solidarisation étanche entre la bride 23 et le corps 22, ainsi que les spécificités géométriques de la partie de la bride, dédiée à cette solidarisation, ne sont pas limitatives.

La porte 24 est déplaçable par rapport à la bride 23 entre deux configurations distinctes, à savoir une configuration fermée, qui est illustrée sur les figures 4 et 5 et dans laquelle la porte 24 obture de manière étanche l'ouverture traversante de la bride 23, et une configuration ouverte, qui est illustrée par les figures 1 et 2 et dans laquelle la porte 24 est dégagée de l'ouverture traversante de la bride 23, ici à l'extérieur du volume V20, en permettant d'accéder au volume V20 depuis l'extérieur du conteneur 20 via l'ouverture traversante de la bride 23. L'obturation de l'ouverture traversante de la bride 23 par la porte 24 en configuration fermée est étanchée par tout moyen d'étanchéité approprié, interposé entre la bride 23 et la porte 24, tel qu'un joint 25 qui est ici prévu solidaire de la bride 23.

La porte 24 passe de manière réversible de l'une à l'autre des configurations fermée et ouverte par écartement vis-à-vis de la bride 23, comme expliqué plus en détail par la suite.

Suivant une forme de réalisation pratique, qui est mise en œuvre dans l'exemple illustré aux figures, la porte 24 en configuration fermée est montée sur la bride 23 de manière mobile, en particulier de manière rotative autour de l'axe Z21, entre une position connectée, qui est illustrée sur les figures 4 et 5 et dans laquelle la porte 24 est liée fixement à la bride 23, et une position déconnectée, dans laquelle la porte 24 est défixée vis-à-vis de la bride 23 et ainsi déplaçable vers la configuration ouverte. La liaison mobile entre la porte 24 et la bride 23, notamment la liaison rotative autour de l'axe Z21, permettant à la porte de passer de manière réversible entre les positions connectée et déconnectée, est réalisée par des moyens de fixation ad hoc 26. Dans l'exemple de réalisation considéré ici, ces moyens de fixation 26 sont constitués par un système de fixation à baïonnette, dont les parties constitutives complémentaires sont respectivement portées par la bride 23 et la porte 24 : ainsi, à titre d'exemple, ce système à baïonnette inclut, d'une part, des pattes 26.1, qui sont visibles sur les figures 3 et 4, qui sont saillantes vers l'axe Z21 depuis le bord de l'ouverture traversante de la bride 23 et qui sont réparties suivant la périphérie de ce bord, et, d'autre part, des rainures 26.2, qui sont visibles sur les figures 3 et 4, qui sont tournées vers l'axe Z21 depuis la périphérie extérieure de la porte 24 et qui sont réparties suivant cette périphérie extérieure, de sorte que, par centrage de la porte 24 et de la bride 23 sur l'axe Z21, chaque patte 26.1 est prévue pour être engagée de manière axiale entre deux des rainures 26.2 successives, puis, par déplacement relatif en rotation autour de l'axe Z21 entre la porte et la bride, chaque patte 26.1 est prévue pour être introduite de manière orthoradiale dans une des rainures 26.2, comme sur la figure 4. Des spécifications plus précises d'un exemple, non limitatif, de ce système à baïonnette sont données dans EP 2 091 051 auquel le lecteur peut se reporter.

Dans tous les cas, lorsque la porte 25 est dans la configuration fermée, le volume V20 est totalement séparé de l'extérieur du conteneur 20 par le corps 22 de ce dernier et le dispositif d'accès 21. Autrement dit, lorsque la porte 24 est en configuration fermée, le volume V20 est coupé du milieu extérieur au conteneur 20, c'est-à-dire qu'aucun élément, tel que de l'air, des poussières ou des agents biologiques ou chimiques, ne peut circuler librement entre le volume V20 et l'extérieur du conteneur 20.

Le portoir 10 et le conteneur 20 sont conçus pour coopérer l'un avec l'autre. Plus précisément, le conteneur 20 est prévu, à la fois, pour loger fixement le portoir 10 dans le volume V20 lorsque la porte 24 est en configuration fermée, et laisser le portoir 10 être introduit dans le volume V20 et en être retiré lorsque la porte 24 est en configuration ouverte. En pratique, de multiples formes de réalisation sont envisageables pour réaliser une telle coopération entre le portoir 10 et le conteneur 20. Dans tous les cas, on comprend que l'ouverture traversante de la bride 23 est façonnée, en particulier dimensionnée, pour laisser le portoir 10 entrer et sortir du volume V20 lorsque la porte 24 est en configuration ouverte. Dans le même temps, lorsque la porte 24 est en configuration fermée, le portoir 10, en particulier son corps 11, et le conteneur 20, en particulier son corps 22, coopèrent, soit directement, notamment par complémentarité de formes, soit indirectement, afin de caler fixement le portoir 10 dans le volume V20. Dans l'exemple de réalisation considéré sur les figures, ce calage est avantageusement réalisé entre le corps 22 du conteneur 20, en particulier la paroi tubulaire 22.1, et les reliefs 14 du corps 11 du portoir 10, comme illustré sur la figure 4 : les reliefs 14 forment ainsi des reliefs de calage, prévus pour coopérer par complémentarité de formes avec le corps 22 du conteneur 20 de manière à maintenir en place le portoir 10 dans le volume V20, avec les axes Z21 et Z11 qui se retrouvent sensiblement alignés. Bien entendu, la forme de réalisation des reliefs 14, illustrée sur les figures, n'est pas limitative et d'autres formes de réalisation sont envisageables pour ces reliefs de calage.

Les reliefs de calage précités, tels que les reliefs 14, sont façonnés de manière à, lorsque la porte 24 est en configuration ouverte, laisser le portoir 10 entrer et sortir du volume V20 sans que ces reliefs de calage n'entrent en interférence mécanique avec les moyens de fixation 26, en particulier avec la partie de ces moyens de fixation 26 portée par la bride 23, telle que les pattes 26.1. Ainsi, dans l'exemple de réalisation considéré sur les figures, les reliefs 14 sont façonnés de manière à pouvoir être engagés entre deux des pattes 26.1 successives, et donc sans interférer mécaniquement avec ces dernières, lorsque le portoir 10 est introduit/retiré vis-à-vis du volume V20 suivant un mouvement translatif parallèle à l'axe Z21.

La centrifugeuse 30 est adaptée pour soumettre le conteneur 20 à une force centrifuge. En pratique, la centrifugeuse 30 relève d'une technologie connue en soi et sa forme de réalisation n'est pas limitative du moment que le conteneur 20 puisse être monté de manière réversible sur la centrifugeuse en vue d'être soumis à une force centrifuge. A cet effet, la centrifugeuse 30 comporte avantageusement un rotor 31, qui est entraînable en rotation sur lui-même autour d'un axe de centrifugation Z31, et qui est pourvu de moyens de montage 32 adaptés pour monter le conteneur 20 de manière réversible sur le rotor 31. Ces moyens de montage 32 comprennent par exemple une nacelle pouvant accueillir simultanément plusieurs conteneurs 20, comme illustré schématiquement sur la figure 5.

L'isolateur 40 délimité un volume V40 clos, auquel il est possible d'accéder par un dispositif d'accès 41 dont est pourvu l'isolateur 40. A cet effet, l'isolateur 40 comporte une enceinte 42 sur laquelle est monté le dispositif d'accès 41. Dans l'exemple de réalisation considéré sur les figures, l'enceinte 42 comprend un plan de travail 42.1 et des parois 42.2 qui entourent et coiffent le plan de travail 42.1. Comme bien visible sur les figures 1 et 2, le dispositif d'accès 41 est porté par l'une des parois 42.2. En variante non représentée, le dispositif d'accès 41 peut aussi être monté sur le plan de travail 42.1. Dans tous les cas, le volume V40 est délimité par le plan de travail 42.1, les parois 42.2 et le dispositif d'accès 41.

Le volume V40 est suffisant grand pour y placer divers objets, qui ne sont pas représentés sur les figures 1 et 2 et qui sont notamment utilisés dans le cadre de la préparation des produits centrifugés précités. En particulier, le volume V40 est suffisamment grand pour accueillir et y déplacer le portoir 10. Le volume V40 est également suffisamment grand pour accueillir le ou les tubes 1, y compris lorsqu'ils sont séparés du portoir 10, ainsi que le ou les constituants de la substance 2 à centrifuger. En revanche, la centrifugeuse 30 est prévue pour être agencée à l'extérieur du volume V40, évitant ainsi à ce dernier de présenter des dimensions substantielles qui auraient été nécessaires si la centrifugeuse 30 avait dû être accueillie dans le volume V40.

Afin qu'un opérateur, situé à l'extérieur de l'isolateur 40, puisse manipuler des objets situés dans le volume V40 et, en particulier, puisse déplacer le portoir 10 à l'intérieur du volume V40, l'isolateur 40 est avantageusement équipé d'au moins une paire de gants de manipulation 43. Un seul de ces gants de manipulation 43 est représenté sur la figure 2, tandis que, sur la figure 1, aucun de ces gants de manipulation n'est représenté pour des raisons de visibilité. Chaque gant de manipulation 43 est porté de manière étanche par l'enceinte 42, en s'étendant à l'intérieur du volume V40 depuis un trou traversant 42.3 de l'enceinte 42. Ainsi, chacun des trous traversants 42.3 est relié de façon étanche à une manchette du gant de manipulation 43 correspondant de sorte que l'opérateur, situé à l'extérieur de l'isolateur 40, passe ses bras par les trous traversants 42.3 et glisse ses mains dans les gants de manipulation 43 en vue de manipuler le portoir 10 et d'autres objets, situés dans le volume V40.

Comme bien visible sur les figures 1 et 2, le dispositif d'accès 41 comporte une bride 44 et une porte 45.

De manière similaire à la bride 23, la bride 44 délimite une ouverture traversante, présentant un contour fermé, et définit ainsi un axe central Z41 sur lequel cette ouverture traversante est centrée. La bride 44 est solidarisée de manière étanche à l'enceinte 42 de manière à relier le volume V40 avec l'extérieur de cette enceinte 42, via l'ouverture traversante de la bride 44. La forme de réalisation de la solidarisation étanche entre la bride 44 et l'enceinte 42, ainsi que les spécificités géométriques de la partie de la bride 44, dédiée à cette solidarisation, ne sont pas limitatives.

La porte 45 est montée sur la bride 44 de manière mobile entre une position ouverte, qui est montrée sur les figures 1 et 2 et dans laquelle la porte 45 est dégagée de l'ouverture traversante de la bride 44, ici à l'intérieur du volume V40, en permettant ainsi d'accéder au volume V40 depuis l'extérieur de l'enceinte 42 via l'ouverture traversante de la bride 44, et une position fermée, qui n'est pas montrée sur les figures et dans laquelle la porte 45 obture de manière étanche l'ouverture traversante de la bride 44. L'obturation de cette ouverture traversante par la porte 45 en position fermée est étanchée par tout moyen d'étanchéité approprié, interposé entre la bride 44 et la porte 45, tel qu'un joint 46 qui est ici prévu solidaire de la porte 45.

La porte 45 passe de manière réversible de l'une à l'autre des positions fermée et ouverte par écartement vis-à-vis de la bride 44. Dans l'exemple de réalisation considéré sur les figures, la porte 45 est ainsi avantageusement déplaçable entre les positions fermée et ouverte par basculement autour d'un axe Y41 qui s'étend dans une direction orthoradiale à l'axe Z41. La liaison basculante entre la porte 45 et la bride 44 est réalisée, par exemple, par un mécanisme à charnière, qui définit l'axe de basculement Y41 et dont les parties constitutives, mobiles l'une par rapport à l'autre, sont respectivement portées par la bride 44 et la porte 45. Pour faciliter le déplacement de la porte 45 entre ses positions fermée et ouverte, cette porte est par exemple équipée d'une poignée de manœuvre 47.

Dans tous les cas, lorsque la porte 45 est en position fermée, le volume V40 est totalement séparé de l'extérieur de l'isolateur 40 par l'enceinte 42 et le dispositif d'accès 41. Autrement dit, lorsque la porte 45 est en position fermée, l'intérieur de l'isolateur 40, qui correspond au volume V40, est coupé de l'extérieur de l'isolateur, de sorte qu'aucun élément, tel que de l'air, des poussières ou des agents biologiques ou chimiques, ne peut circuler librement entre le volume V40 et l'extérieur de l'isolateur 40. En pratique, l'atmosphère régnant dans le volume V40 est contrôlée par divers équipements, qui sont connus en soi et qui comprennent par exemple des équipements de ventilation, des éléments de filtration, de l'air, des éléments de décontamination de l'air, etc. Ces équipements de contrôle de l'atmosphère du volume V40 ne sont pas représentés sur les figures.

Afin de pouvoir connecter de manière étanche les volumes V20 et V40 l'un avec l'autre, les dispositifs d'accès 21 et 41 sont assemblables l'un à l'autre de manière réversible. Dans un état assemblé de ces dispositifs d'accès, qui est illustré sur les figures 1 et 2, les axes centraux Z21 et Z41 des dispositifs d'accès sont sensiblement alignés et les volumes V20 et V40 sont reliés entre eux à travers les brides 23 et 44 lorsque les portes 24 et 45 sont respectivement en configuration ouverte et en position ouverte. Dans un état désassemblé des dispositifs d'accès 21 et 41, qui est partiellement représenté sur les figures 4 et 5, le conteneur 20 est déplaçable, à l'extérieur du volume V40, entre l'isolateur 40 et la centrifugeuse 30 tout en maintenant les portes 24 et 45 respectivement en configuration fermée et en position fermée.

Suivant une forme de réalisation préférentielle pour l'assemblage des dispositifs d'accès 21 et 41, les brides 23 et 44 sont pourvues de moyens de fixation 50 permettant de fixer de façon réversible les brides l'une à l'autre, et les portes 24 et 45 sont pourvues de moyens de fixation 60 permettant de fixer de façon réversible les portes l'une à l'autre. Ces moyens de fixation 50 et 60 sont conçus pour, par le biais d'une même manœuvre rotative entre les brides 23 et 44, à la fois assembler fixement l'une à l'autre ces deux brides et assembler fixement l'une à l'autre les portes 24 et 45, tout en passant la porte 24 en position déconnectée vis-à-vis de la bride 23, autrement dit tout en défixant la porte 24 vis-à-vis de la bride 23. En d'autres termes, les dispositifs d'accès 21 et 41 sont prévus pour passer de l'état désassemblé à l'état assemblé en centrant les brides 23 et 44 l'une sur l'autre, c'est-à-dire en alignant les axes centraux Z21 et Z41, puis en déplaçant ces brides 23 et 44 l'une par rapport à l'autre autour des axes alignés Z21 et Z41, de sorte que les moyens de fixation 50 lient fixement les brides 23 et 44 l'une à l'autre tandis que, dans le même temps, d'une part, les moyens de fixation 60 lient fixement la porte 24 en configuration fermée à la porte 45 en position fermée et, d'autre part, les moyens de fixation 26 défixent la porte 24 en configuration fermée vis-à-vis de la bride 23 moyennant le déplacement de la porte 24 de sa position connectée à sa position déconnectée par rapport à la bride 23. Par réversibilité, les dispositifs d'accès 21 et 41 passent de l'état assemblé à l'état désassemblé.

Dans l'exemple de réalisation considéré sur les figures, les moyens de fixation 50 sont réalisés sous la forme d'un système à baïonnette, dont les parties constitutives complémentaires sont respectivement portées par la bride 23 et la bride 44 : ce système à baïonnette inclut, d'une part, des pattes 27, qui sont visibles sur les figures 2 à 4, qui sont saillantes à l'opposé de l'axe Z21 depuis la périphérie extérieure de la bride 23 et qui sont réparties suivant cette périphérie extérieure, et, d'autre part, des rainures 48, qui sont visibles sur la figure 2, qui sont creusées en direction opposée de l'axe Z41 depuis le bord de l'ouverture traversante de la bride 44 et qui sont réparties suivant la périphérie de ce bord, de sorte que, par centrage des brides 23 et 44 sur les axes alignés Z21 et Z41 puis par déplacement rotatif autour de ces axes alignés, chaque patte 27 est prévue pour être engagée de manière axiale entre deux rainures 48 successives, puis être introduite de manière orthoradiale dans une de ces rainures 48, comme montré sur la figure 2. Des spécifications plus précises d'un exemple, non limitatif, de ce système à baïonnette sont données dans EP 2 091 051 auquel le lecteur peut se reporter.

De même, dans l'exemple de réalisation considéré sur les figures, les moyens de fixation 60 sont réalisés sous forme d'un système à baïonnette, dont les parties constitutives complémentaires sont respectivement portées par la porte 24 et la porte 45 : ce système à baïonnette inclut, d'une part, des pattes 28, qui sont visibles sur les figures 3 et 4, qui sont saillantes vers l'axe Z21 depuis la périphérie intérieure d'un rebord périphérique de la porte 24 et qui sont réparties suivant cette périphérie intérieure de ce rebord, et, d'autre part, des rainures, qui ne sont pas visibles sur les figures, qui sont creusées vers l'axe Z41 depuis la périphérie extérieure d'un rebord périphérique de la porte 45, et qui sont réparties suivant la périphérie extérieure de ce rebord, de sorte que, par centrage des portes 24 et 45 sur les axes alignés Z21 et Z41 puis par déplacement relatif en rotation autour de ces axes alignés, chaque patte 28 est engagée de manière axiale entre deux des rainures précitées, qui se succèdent, puis est introduite de manière orthoradiale dans une de ces rainures précitées. Des spécifications plus précises d'un exemple, non limitatif, de ce système à baïonnette sont données dans EP 2 091 051 auquel le lecteur peut se reporter.

Bien entendu, de manière usuelle pour tout système à baïonnette, chacune des rainures 26.2 de la porte 24, des rainures 48 de la bride 44 et des rainures précitées de la porte 45 est, à son extrémité périphérique opposée à celle par laquelle une des pattes correspondantes 26.1, 27 et 28 est prévue pour être introduite, fermée par tout élément fixe approprié, contre lequel vient buter la patte précitée lorsque cette dernière est introduite au maximum dans la rainure, autrement dit lorsque la course rotative maximale entre la rainure et la patte est réalisée. Plus généralement, on comprend que la course rotative d'assemblage, par les moyens de fixation 50, entre les brides 23 et 44, qui vaut typiquement 30° à 60°, correspond au cumul de la course rotative entre les portes 24 et 45 pour les assembler l'une à l'autre par les moyens de fixation 60 et de la course rotative entre la porte 24 et la bride 23 pour les déconnecter l'une de l'autre par neutralisation des moyens de fixation 26.

Quelles que soient les spécificités de réalisation du portoir 10, du conteneur 20, de la centrifugeuse 30 et de l'isolateur 40, l'installation à laquelle ces derniers appartiennent est utilisable pour préparer les produits centrifugés précités de la façon suivante.

Tout d'abord, l'installation est initialement mise à disposition comme sur les figures 1 et 2, c'est-à-dire que les dispositifs d'accès 21 et 41 sont dans l'état assemblé et les portes 24 et 45 sont respectivement en configuration ouverte et en position ouverte. De plus, de manière non représentée sur les figures 1 et 2, le portoir 10 est agencé dans le volume V40 de l'isolateur 40 et retient le ou les tubes 1 contenant la substance 2 à centrifuger.

Ensuite, au cours d'une première étape, le portoir 10 est déplacé dans le volume V40 jusqu'à être introduit dans le volume V20 du conteneur 20. Ce déplacement est opéré depuis l'intérieur du volume V40. Pour ce faire, l'opérateur se trouvant à l'extérieur de l'isolateur 40 utilise les gants de manipulation 43 et peut notamment saisir la poignée de préhension 13 et/ou directement le corps 11 du portoir 10.

Au cours d'une étape subséquente, les portes 24 et 45 sont respectivement déplacées dans la configuration fermée et la position fermée, alors que le portoir 10 est dans le volume V20 du conteneur 20. Pour ce faire, l'opérateur entraîne en déplacement la porte 45, notamment en agissant sur la poignée de manœuvre 47. Comme la porte 24 est fixée à la porte 45 par les moyens de fixation 60, l'entraînement en déplacement de la porte 45 induit celui de la porte 24.

Au cours d'une étape subséquente, les dispositifs d'accès 21 et 41 sont passés de l'état assemblé à l'état désassemblé, tout en maintenant les portes 24 et 45 respectivement en configuration fermée et en position fermée. Pour ce faire, l'opérateur se saisit, à l'extérieur de l'isolateur 40, directement du conteneur 20 et l'entraîne en rotation autour de l'axe Z21 de manière à neutraliser les moyens de fixation 50 : comme expliqué plus haut, le déplacement rotatif correspondant entre les brides 23 et 43 induit d'abord le déplacement de la porte 24 de sa position déconnectée à sa position connectée par rapport à la bride 23, ce qui revient à dire que la porte 24 en configuration fermée se retrouve fixée vis-à-vis de la bride 23 par les moyens de fixation 26, puis le déplacement de la porte 24 en configuration fermée vis-à-vis de la porte 45 en position fermée jusqu'à défixer ces portes l'une par rapport à l'autre moyennant la neutralisation des moyens de fixation 60. Les brides 23 et 44 se retrouvent défixées l'une par rapport à l'autre, moyennant la neutralisation des moyens de fixation 50.

Le conteneur 20, qui n'est plus relié à l'isolateur 40 et qui est tel qu'illustré sur la figure 4, peut alors être déplacé par l'opérateur depuis l'isolateur 40 jusqu'à la centrifugeuse 30, à l'extérieur du volume V40.

Au cours d'une étape subséquente, le conteneur 20 est monté sur la centrifugeuse 30 comme illustré sur la figure 5, puis cette dernière est actionnée de manière à soumettre le conteneur 20 à une force centrifuge. La substance 2 se trouvant dans le ou les tubes 1 retenus sur le portoir 10 logé dans le conteneur 20 est alors centrifugée, jusqu'à obtenir le produit centrifugé précité.

Au cours d'une étape subséquente, le conteneur 20 est dégagé de la centrifugeuse 30 après arrêt de cette dernière, puis est déplacé depuis cette centrifugeuse jusqu'à l'isolateur 40 par l'opérateur. Le conteneur 20 peut alors être refixé à l'isolateur 40, en repassant les dispositifs d'accès 21 et 41 dans l'état assemblé, moyennant l'assemblage des brides 23 et 44 décrit plus haut, opéré de manière inverse à ce qui a été décrit ci-dessus pour leur désassemblage.

Au cours d'une étape subséquente, les portes 24 et 45, qui ont été maintenues fermées pendant que le conteneur 20 était séparé de l'isolateur 40, sont respectivement déplacées dans la configuration ouverte et dans la position ouverte. Pour ce faire, depuis l'intérieur du volume V40, l'opérateur agit sur la poignée de manouvre 47 de manière à entrainer en déplacement la porte 45 et, par-là, la porte 24 fixée à la porte 45 par les moyens de fixation 60.

Au cours d'une étape subséquente, le portoir 10 est retiré du volume V20 du conteneur 20 pour être introduit dans le volume V40 de l'isolateur 40. Le déplacement correspondant du portoir 10 est opéré depuis l'intérieur du volume V40. Pour ce faire, l'opérateur se saisit, par l'intermédiaire des gants de manipulation 43, de la poignée de préhension 13.

Ainsi, le procédé de préparation qui vient d'être décrit est simple à mettre en œuvre, tout en étant efficace pour obtenir le produit centrifugé.

Divers aménagements et variantes à l'installation décrite jusqu'ici, ainsi qu'au procédé de préparation du produit centrifugé, sont envisageables. A titre d'exemple, la forme de réalisation des différents systèmes à baïonnette décrite plus haut n'est pas limitative : plus généralement, d'autres systèmes de fixation réversible peuvent être envisagés pour les moyens de fixation 26, 50 et/ou 60.

## Revendications

1. Installation de préparation d'un produit centrifugé,
laquelle installation comprend :
- un portoir (10) qui comporte un corps (11) intégrant des aménagements (12) conçus pour recevoir de manière amovible et retenir de manière fixe un ou plusieurs tubes (1) contenant une substance (2) à centrifuger,
- un conteneur (20), qui délimite un premier volume (V20) clos et qui est pourvu d'un premier dispositif d'accès (21) comprenant une première bride (23), à travers laquelle le premier volume est relié à l'extérieur du conteneur, et une première porte (24) qui est déplaçable par rapport à la première bride entre une configuration fermée, dans laquelle la première porte obture la première bride de manière étanche, et une configuration ouverte, dans laquelle la première porte est dégagée de la première bride pour donner accès au premier volume à travers la première bride, la première bride (23) et la première porte (24) étant pourvues de premiers moyens de fixation (26) adaptés pour fixer l'une à l'autre de façon réversible la première bride et la première porte en configuration fermée, lequel conteneur est conçu pour :
- loger fixement le portoir (10) dans le premier volume (V20) lorsque la première porte (24) est en configuration fermée, le corps (11) du portoir (10) intégrant des reliefs de calage (14) qui coopèrent par complémentarité de formes avec le conteneur (20) de manière à maintenir en place le portoir dans le premier volume (V20), et
- laisser le portoir être introduit dans le premier volume et être retiré du premier volume lorsque la première porte est en configuration ouverte, les premiers moyens de fixation (26) et les reliefs de calage (14) étant façonnés de manière à, lorsque la première porte (24) est en configuration ouverte, laisser le portoir (10) entrer et sortir du premier volume (V20) sans que les reliefs de calage n'entrent en interférence mécanique avec les premiers moyens de fixation,
- une centrifugeuse (30) adaptée pour soumettre le conteneur (20) à une force centrifuge, et
- un isolateur (40), qui délimite un second volume (V40) clos à l'intérieur duquel le portoir (10) est déplaçable et à l'extérieur duquel la centrifugeuse (30) est agencée, et qui est pourvu d'un second dispositif d'accès (41) comprenant une seconde bride (44), à travers laquelle le second volume est relié à l'extérieur de l'isolateur, et une seconde porte (45) qui est déplaçable par rapport à la seconde bride entre une position fermée, dans laquelle la seconde porte obture la seconde bride de manière étanche, et une position ouverte, dans laquelle la seconde porte est dégagée de la seconde bride pour donner accès au second volume à travers la seconde bride,
et dans laquelle le premier dispositif d'accès (21) et le second dispositif d'accès (41) sont assemblables de manière réversible l'un à l'autre de sorte que :
- dans un état assemblé des premier et second dispositifs d'accès, les premier et second volumes (V20, V40) sont reliés entre eux à travers les première et seconde brides (23, 44) lorsque les première et seconde portes (24, 45) sont respectivement en configuration ouverte et en position ouverte, et
- dans un état désassemblé des premier et second dispositifs d'accès, le conteneur (20) est déplaçable entre l'isolateur (40) et la centrifugeuse (30) tout en maintenant les première et seconde portes respectivement en configuration fermée et en position fermée.

2. Installation suivant la revendication 1,
dans laquelle les premiers moyens de fixation (26) sont constitués d'un système de fixation à baïonnette, ayant des parties constitutives complémentaires qui sont respectivement portées par la première bride (23) et par la première porte (24), et
dans laquelle les premiers moyens de fixation (26) et les reliefs de calage (14) sont façonnés de manière à, lorsque la première porte (24) est en configuration ouverte, laisser le portoir (10) entrer et sortir du premier volume (V20) sans que les reliefs de calage n'entrent en interférence mécanique avec la partie constitutive du système de fixation à baïonnette, portée par la première bride (23).

3. Installation suivant la revendication 2,
dans laquelle la première bride (23) délimite une ouverture traversante, qui présente un contour fermé et qui est centrée sur un premier axe (Z21),
dans laquelle le corps (11) du portoir (10) présente une forme globalement cylindrique, centrée sur un axe géométrique (Z11),
dans laquelle les reliefs de calage (14) sont en saillie de la face latérale du corps (11) du portoir (10), en s'étendant chacun entre des extrémités axiales opposées de ce corps, et sont répartis régulièrement autour de l'axe géométrique (Z11), en étant espacés deux à deux suivant la périphérie de ce corps,
dans laquelle les reliefs de calage (14) maintiennent en place le portoir (10) dans le premier volume (V20) en coopérant par complémentarité de formes avec le conteneur (20) de manière à aligner l'axe géométrique (Z11) avec le premier axe (Z21),
dans laquelle le système de fixation à baïonnette inclut à la fois des pattes (26.1), qui sont saillantes vers le premier axe (Z21) depuis le bord de l'ouverture traversante de la première bride (23) et qui sont réparties suivant la périphérie de ce bord, et des rainures (26.2), qui sont tournées vers le premier axe (Z21) depuis la périphérie extérieure de la première porte (24) et qui sont réparties suivant cette périphérie extérieure, de sorte que, par centrage de la première porte et de la première bride sur le premier axe, chaque patte est prévue pour être engagée de manière axiale entre deux des rainures successives, puis, par déplacement relatif en rotation autour du premier axe entre la première porte et la première bride, chaque patte est prévue pour être introduite de manière orthoradiale dans une des rainures, et
dans laquelle les reliefs de calage (14) sont façonnés de manière à pouvoir être engagés entre deux des pattes (26.1) successives, sans interférer mécaniquement avec ces pattes, lorsque le portoir (10) est introduit/retiré vis-à-vis du premier volume (V20) suivant un mouvement translatif parallèle au premier axe (Z21).

4. Installation suivant l'une quelconque des revendications précédentes, dans laquelle le portoir (10) comprend une poignée de préhension (13).

5. Installation suivant les revendications 3 et 4 prises ensemble,
dans laquelle lesdits aménagements (12) comprennent des trous, qui sont respectivement complémentaires des tubes (1) et qui débouchent sur une face d'extrémité axiale du corps (11) du portoir (10), en étant répartis autour de l'axe géométrique (Z11), et
dans laquelle la poignée de préhension (13) est centrée sur l'axe géométrique (Z11) et s'étend en saillie depuis la face d'extrémité axiale du corps (11) du portoir (10), sur laquelle débouchent lesdits trous.

6. Installation suivant l'une quelconque des revendications précédentes, dans laquelle la première bride (23) et la seconde bride (44) sont pourvues de deuxièmes moyens de fixation (50) adaptés pour fixer de façon réversible les première et seconde bride l'une à l'autre,
dans laquelle la première porte (24) et la seconde porte (45) sont pourvues de troisièmes moyens de fixation (60) adaptés pour fixer de façon réversible les première et seconde portes l'une à l'autre, et
dans laquelle les premier et second dispositifs d'accès (21, 41) passent de l'état désassemblé à l'état assemblé en alignant les première et seconde brides sur un axe central (Z21, Z41) et en déplaçant les première et seconde brides l'une par rapport à l'autre autour de cet axe central de sorte que les deuxièmes moyens de fixation lient fixement les première et seconde brides l'une à l'autre tandis que, dans le même temps, les troisièmes moyens de fixation lient fixement la première porte en configuration fermée à la seconde porte en position fermée et les premiers moyens de fixation (26) défixent la première porte en configuration fermée vis-à-vis de la première bride.

7. Installation suivant l'une quelconque des revendications précédentes, dans laquelle l'isolateur (40) est équipé de gants de manipulation (43) qui permettent à un opérateur, situé à l'extérieur du second volume (V40), de manipuler des objets situés dans le second volume et de déplacer le portoir (10) à l'intérieur du second volume.

8. Installation suivant l'une quelconque des revendications précédentes, dans laquelle la centrifugeuse (30) comprend un rotor (31), qui est entraînable en rotation sur lui-même autour d'un axe de centrifugation (Z31) et qui est pourvu de moyens de montage (32) adaptés pour monter le conteneur (20) de manière réversible sur le rotor.

9. Procédé de préparation d'un produit centrifugé,
dans lequel le procédé est mis en œuvre en utilisant une installation conforme à l'une quelconque des revendications précédentes,
dans lequel ladite installation est initialement mise à disposition de sorte que :
- le portoir (10) est agencé dans le second volume (V40) et retient un ou plusieurs tubes (1) contenant une substance (2) à centrifuger,
- les premier et second dispositifs d'accès (21, 41) sont dans l'état assemblé, et
- les première et seconde portes (24, 45) sont respectivement en configuration ouverte et en position ouverte,
et dans lequel ladite installation est ensuite utilisée de la façon suivante :
- depuis l'intérieur du second volume (V40), le portoir (10) est déplacé dans le second volume jusqu'à être introduit dans le premier volume (V20), puis
- alors que le portoir (10) est dans le premier volume (V20), les première et seconde portes (24, 45) sont respectivement déplacées dans la configuration fermée et la position fermée, puis
- tout en maintenant les première et seconde portes respectivement en configuration fermée et en position fermée, les premier et second dispositifs d'accès (21, 41) sont passés dans l'état désassemblé et le conteneur (20) est déplacé depuis l'isolateur (40) jusqu'à la centrifugeuse (30), puis
- la centrifugeuse est actionnée de manière à soumettre le conteneur à une force centrifuge, puis
- le conteneur est déplacé depuis la centrifugeuse jusqu'à l'isolateur et les premier et second dispositifs d'accès sont repassés dans l'état assemblé, puis
- les première et seconde portes sont respectivement placées dans la configuration ouverte et dans la position ouverte, puis
- depuis l'intérieur du second volume (V40), le portoir (10) est retiré du premier volume (V20) et introduit dans le second volume.

10. Procédé suivant la revendication 9, dans lequel le produit centrifugé est un produit médicamenteux.
